# EUROPÄISCHE PATENTSCHRIFT

(11) **EP 4 077 470 B1**
(45) Veröffentlichungstag und Bekanntmachung des Hinweises auf die Patenterteilung: **16.08.2023**
(21) Anmeldenummer: 20824551.4
(22) Anmeldetag: 15.12.2020
(51) Int. Cl.: C08G 63/64, C08G 63/78, C08G 63/83

(54) **POLYESTERCARBONATE AUS ALIPHATISCHEN DISÄUREN UND ALIPHATISCHEN DIOLEN UND VERFAHREN ZU IHRER HERSTELLUNG**
POLYESTER CARBONATES MADE FROM CYCLOALIPHATIC DIACIDS AND ALIPHATIC DIOLS AND METHOD FOR PRODUCING THE SAME
CARBONATES DE POLYESTER DES DIACIDES CYCLOALIPHATIQUES ET DES DIOLS ALIPHATIQUES ET LEUR PROCÉDÉ DE PRODUCTION

(30) Priorität: 16.12.2019 EP 19216480
(43) Veröffentlichungstag der Anmeldung: 26.10.2022
(73) Patentinhaber: Covestro Intellectual Property GmbH & Co. KG, 51373 Leverkusen (DE)
(72) Erfinder: MEYER, Alexander, 40489 Düsseldorf (DE); HEIJL, Jan, 9160 Lokeren (BE); HEUER, Helmut, Werner, 57074 Siegen (DE); BERTIN, Annabelle, 2020 Antwerpen (BE)
(74) Vertreter: Levpat
(86) Internationale Anmeldenummer: PCT/EP2020/086099
(87) Internationale Veröffentlichungsnummer: WO 2021/122514

(56) Entgegenhaltungen:
- EP-A1- 3 026 074
- WO-A1-01/32742
- OKADA M ET AL: "Biodegradable polymers based on renewable resources. VI. Synthesis and biodegradability of poly(ester carbonate)s containing 1,4:3,6-dianhydro-D-glucitol and sebacic acid units", JOURNAL OF APPLIED POLYMER SCIENCE, JOHN WILEY & SONS, INC, US, Bd. 86, Nr. 4, 1. Januar 2002 (2002-01-01) , Seiten 872-880, XP002582390, ISSN: 0021-8995

## Beschreibung

Die vorliegende Erfindung betrifft ein Verfahren zur Herstellung eines Polyestercarbonats ausgehend von aliphatischen, bevorzugt cycloaliphatischen Disäuren und aliphatischen Diolen, das nach dem Verfahren hergestellte Polyestercarbonat selbst, eine Formmasse enthaltend das Polyestercarbonat und Formkörper enthaltend das Polyestercarbonat.

Es ist bekannt, dass Polyester, Polycarbonate sowie Polyestercarbonate gute Eigenschaften bezüglich Mechanik, Wärmeformbeständigkeit und Bewitterungsbeständigkeit aufweisen. Jede Polymergruppe weist in Abhängigkeit der verwendeten Monomere bestimmte Schlüsselmerkmale auf, durch die sich derartige Materialien auszeichnen. So weisen Polycarbonate insbesondere gute mechanische Eigenschaften auf, wohingegen Polyester häufig eine bessere Chemikalienbeständigkeit zeigen. Polyestercarbonate zeigen in Abhängigkeit der gewählten Monomere Eigenschaftsprofile aus beiden genannten Gruppen.

Aromatische Polycarbonate oder Polyester weisen zwar häufig ein gutes Eigenschaftsprofil auf, zeigen jedoch bzgl. der Alterungs- und Bewitterungsbeständigkeit Schwächen. So kommt es beispielsweise durch Absorption von UV-Licht zur Vergilbung und ggf. Versprödung dieser thermoplastischen Materialien. Aliphatische Polycarbonate und Polyestercarbonate weisen diesbezüglich bessere Eigenschaften, insbesondere bessere Alterungs- und/oder Bewitterungsbeständigkeiten sowie besser optische Eigenschaften (beispielsweise Transmission) auf.

Der Nachteil aliphatischer Polycarbonate oder Polyestercarbonate ist häufig deren geringe Glastemperatur. Deshalb ist es von Vorteil cycloaliphatische Alkohole als (Co)Monomere einzusetzen. Derartige cycloaliphatische Alkohole sind beispielsweise TCD-Alkohol (Tricyclodecandimethanol), Cyclohexandiol, Cyclohexandimethanol und biobasierte Diole auf Basis von 1,4:3,6-Dianhydrohexitolen wie Isosorbid und den Isomeren Isomannid und Iosidid. Um die Glastemperatur weiter zu erhöhen, können auch cycloaliphatische Säuren wie 1,2, 1,3 oder 1,4 Cyclohexandicarbonsäuren oder entsprechende Naphthalinderivate als (Co)Monomere eingesetzt werden. Man erhält dann je nach Wahl der Reaktanden Polyester oder Polyestercarbonate. Diese Anmeldung betrifft die direkte Umsetzung der Rohstoffe, d.h. beispielsweise von Isosorbid und aliphatischen, bevorzugt cycloaliphatischen Disäuren zu den entsprechenden Polyestercarbonaten. Die Polyester von Cyclohexandicarbonsäure und Isosorbid sind von Oh et al. in Macromolecules 2013, 46, 2930-2940 beschrieben. Die vorliegende Erfindung ist jedoch bevorzugt auf Polyestercarbonate ausgerichtet.

Polyestercarbonate werden großtechnisch beispielsweise durch Umesterung entsprechender Esterhaltiger Monomere mit Diolen hergestellt. So wird der Polyester aus 1,4-Cylohexandimethanol und 1,4-Cyclohecxandicarbonsäure ausgehend vom Dimethylester der Disäure hergestellt (Blend aus diesem Polyester und Polycarbonat: Xyrex^{®} der DuPont).

Für die Umesterungsreaktion sind Phenylester aber deutlich reaktiver als ihre aliphatischen Analoga. In EP 3026074 A1 und in EP 3248999 A1 werden Verfahren zur Herstellung von Polyestercarbonaten mit Phenylester als Zwischenschritt beschrieben.

In EP 3026074 A1 wird in Beispiel 1 die direkte Reaktion der Disäure mit Phenol zum entsprechenden Ester beschrieben. In Beispiel 2 der EP 3026074 A1 wird ein Dimethylester mit Phenol umgesetzt. Die Ausbeute für beide Varianten der Phenylesterherstellung sind aber noch verbesserungsfähig. Anschließend erfolgt dann die Herstellung des Polyestercarbonats.

In EP 3248999 A1 wird die Herstellung eines Diphenylesters in einem Lösungsmittel und unter Einsatz von Phosgen beschrieben. Da die anschließende Reaktion zum aliphatischen Polyestercarbonat ohne Phosgen auskommt, ist die Kombination eines Phosgenverfahrens mit einem Umesterungsverfahren in einem Anlagenteil sehr unvorteilhaft. Damit ist das in EP 3248999 A1 beschriebene Verfahren auch nicht optimal.

In Kricheldorf et al. (Macromol. Chem. Phys 2010, 211, 1206-1214) wird beschrieben, dass in Polyester aus Cyclohexandicarbonsäure und Isosorbid ausgehend von Cyclohexandisäure oder dem Cyclohexandimethylester nicht zugänglich ist (bzw. nur sehr geringe Molekulargewichte ergibt) und nur aus dem Säurechlorid der Cyclohexandicarbonsäure darstellbar ist.

Die einfache Herstellung von aromatischen Polyestercarbonaten ist beispielsweise in der WO 01/32742 A1 beschrieben. Dort wird eine Direktsynthese oder auch one-pot-Synthese gezeigt, das heißt, eine Synthese, bei der alle das spätere Polyestercarbonat aufbauenden Strukturelemente bereits zu Beginn der Synthese als Monomere anwesend sind. Hier werden als Monomere aromatische Dihydroxyverbindungen wie beispielsweise Bisphenol A, Carbonsäurediester und aromatische oder lineare aliphatische Disäuren eingesetzt. Dadurch, dass in diesem Dokument ausschließlich aromatische Polyestercarbonate hergestellt werden, können bei der Reaktion der Aufkondensation unter Entfernung des entstehenden Phenols Temperaturen von 300 °C verwendet werden. Die Verwendung solcher Temperaturen ist bei der Herstellung von aliphatischen Polyestercarbonaten nicht möglich, da aliphatische Diole bei dieser Temperaturbelastung eliminieren und/oder zu thermischer Zersetzung neigen. Gleichzeitig wird die hohe Temperatur jedoch benötigt, um die gewünschten hohen Molekulargewichte aufzubauen. Hier wird insbesondere die unterschiedliche Reaktivität von aliphatischen und aromatischen Diolen deutlich. Aus der Literatur ist es bekannt, dass beispielsweise Isosorbid selten komplett in ein Polymer einbaut, sondern dass je nach gewählten Reaktionsbedingungen bis zu 25 % des Isosorbids bei der Polymerisationsreaktion verloren werden. Eine Übertragung von Reaktionsbedingungen für aromatische Diole auf aliphatische Diole ist daher nicht ohne Weiteres möglich. Dies wird insbesondere auch daran ersichtlich, dass die Reaktionszeiten der Polykondensation (entspricht Verfahrensschritt (ii)) in der WO01/32742 A1 bei höheren Temperaturen deutlich länger sind als die erfindungsgemäß beobachteten. Ebenso beschreibt dieses Dokument die Verwendung von sehr geringen Mengen an Alkalimetallionen als Katalysator in den Beispielen bzw. eines sehr breiten Mengenbereichs im allgemeinen Teil. Des Weiteren wird eine quartäre Stickstoffbase als weiterer Katalysator eingesetzt. Bei diesen handelt es sich in der Regel um schwerflüchtige Salze, die meist im Reaktionssystem verbleiben. Zudem werden die erhaltenen Diester im Anschluss mit aromatischen Alkoholen (wie beispielsweise Phenol) zu einem Polyestercarbonat umgesetzt. Phenole weisen eine deutlich höhere Acidität als aliphatische Alkohole auf.

Ebenso werden in der JP1992-345616 A und der DE2438053 A1 aromatische Bausteine und entsprechend hohe Temperaturen verwendet. Aus den oben genannten Gründen, ist eine Übertragbarkeit der dortigen Lehren auf aliphatische Bausteine nicht möglich.

Ausgehend von diesem Stand der Technik lag der vorliegenden Erfindung daher die Aufgabe zu Grunde ein Verfahren zur Herstellung eines Polyestercarbonats aus aliphatischen, bevorzugt cycloaliphatischen Disäuren und aliphtischen Diolen mittels Schmelzeumesterung bereitzustellen, welches besonders einfach ist und gleichzeitig ein Polyestercarbonat mit geeigneter Molmasse liefert. Dabei ist "einfach" insbesondere als ein Verfahren zu verstehen, welches apparativ unaufwendig ist, wenige Stufen, insbesondere Aufreinigungsstufen umfasst und/ oder somit ökonomisch und auch ökologisch vorteilhaft ist.

Dabei wird unter geeigneter Molmasse ein Polymer verstanden, welches eine relative Lösungsviskosität von 1,17 bis 1,35, bevorzugt 1,18 bis 1,32 und insbesondere bevorzugt von 1,20 bis 1,31, jeweils gemessen in Dichlormethan bei einer Konzentration von 5 g/l bei 25 °C mit einem Ubbelohdeviskosimeter aufweist. Dem Fachmann ist die Bestimmung der relativen Lösungsviskosität mittels Ubbelohdeviskosimeter bekannt. Erfindungsgemäß wird diese bevorzugt gemäß DIN 51562-3; 1985-05 durchgeführt. Dabei werden die Durchlaufzeiten des zu vermessenden Polyestercarbonats durch das Ubbelohde-Viskosimeter gemessen, um anschließend den Viskositätsunterschied zwischen Polymerlösung und seinem Lösungsmittel zu ermitteln. Dazu wird zunächst eine Kalibrierung des Ubbelohde-Viskosimeters mittels Vermessung der reinen Lösungsmittel Dichlormethan, Trichlorethylen und Tetrachlorethylen durchgeführt (dabei erfolgen immer mindestens 3 Messungen, höchstens 9 Messungen). Daraufhin erfolgt die eigentliche Kalibrierung mit dem Lösungsmittel Dichlormethan. Im Anschluss wird die Polymerprobe eingewogen, in Dichlormethan gelöst und für diese Lösung dann dreimal die Durchflusszeit bestimmt. Der Mittelwert der Durchflusszeiten wird über die Hagenbach-Korrektur korrigiert und die relative Lösungsviskosität errechnet.

Bei einer Lösungsviskosität oberhalb des oben angegebenen Bereiches ist eine thermoplastische Verarbeitbarkeit nur noch schwer möglich. Eine zu niedrige Lösungsviskosität führt zu unzureichenden mechanischen und thermischen Eigenschaften.

Mindestens eine, bevorzugt alle der oben genannten Aufgaben wurden durch die vorliegende Erfindung gelöst. Überraschend wurde gefunden, dass die Synthese eines Polyestercarbonats aus aliphatischen, bevorzugt cycloaliphatischen Disäuren und aliphtischen Diolen mittels Schmelzeumesterung in einer Direktsynthese oder one-pot-Synthese, bei der alle das spätere Polyestercarbonat aufbauenden Strukturelemente bereits zu Beginn der Synthese als Monomere anwesend sind, möglich ist.

Allerdings stellte sich heraus, dass dazu der Einsatz einer Mischung von zwei besonders ausgewählten Katalysatoren notwendig ist, wobei zudem der Anteil an Alkalimetallkationen in der Reaktionsmischung in einem bestimmten Bereich liegen muss. Es war zum einen überraschend, dass eine Direktsynthese trotz der im Stand der Technik beschriebenen Vorurteile auch auf die Reaktion einer aliphatischen, bevorzugt cycloaliphatischen Dicarbonsäure, einer aliphatischen Dihydroxy-Verbindung (oder auch erfindungsgemäße aliphatisches Diol genannt) und einem Diarylcarbonat funktioniert. Dabei war es möglich, verschiedene molare Verhältnisse der aliphatischen, bevorzugt cycloaliphatischen Disäuren und aliphtischen Diolen einzusetzen und trotzdem ein Polymer mit geeigneter Molmasse zu erreichen. Spezielle molare Verhältnisse der aliphatischen, bevorzugt cycloaliphatischen Disäuren und aliphtischen Diolen sind jedoch besonders vorteilhaft.

Zudem war es überraschend, dass nicht die Gesamtmenge an Katalysatoren in der Katalysatormischung entscheidend für das Gelingen der Polymerisationsreaktion ist, sondern der Anteil an Alkalimetallkationen. Auf diese Weise konnte ein Verfahren aufgefunden werden, welches ein Polyestercarbonat aus aliphatischen, bevorzugt cycloaliphatischen Disäuren und aliphtischen Diolen zugänglich macht, welches besonders einfach, das heißt, apparativ unaufwendig ist, wenige Stufen, insbesondere Aufreinigungsstufen erfordert und somit ökonomisch und auch ökologisch vorteilhaft ist. Des Weiteren hat sich als vorteilhaft herausgestellt, dass die erfindungsgemäße tertiäre Stickstoffbase, insbesondere DMAP über Vakuum aus dem System entfernt werden kann. Somit kann dieser Katalysator effektiv und einfach aus dem System entfernt werden.

Das Verfahren zur Herstellung eines erfindungsgemäßen Polyestercarbonats kann beispielsweise durch die Reaktion von Cyclohexandicarbonsäure, Isosorbid und Diphenylcarbonat, wie folgt, schematisch beschrieben werden: 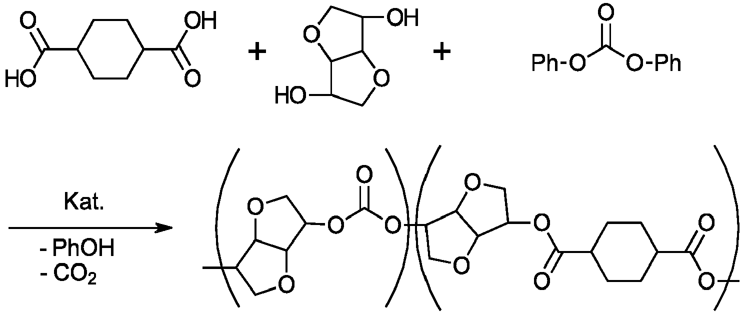 (die Nennung dieser speziellen drei Ausgangssubstanzen dient lediglich der Erläuterung der Erfindung und ist nicht als beschränkend zu verstehen)

In der erfindungsgemäßen Direktsynthese konnte zunächst eine Gasentwicklung durch entweichendes Kohlenstoffdioxid beobachtet werden . Nimmt man eine Probe aus dem Gemisch, nachdem die Gasentwicklung im Wesentlichen nachgelassen hat, so kann man analytisch nachweisen, dass sich bereits Oligomere gebildet haben. Diese Oligomere kondensieren in einem weiteren Schritt zum erfindungsgemäßen Polyestercarbonat auf. Zudem konnte beobachtet werden, dass das erfindungsgemäße Polyestercarbonat im ¹H-NMR mehr Phenylendgruppen aufweist als das in der EP3026074 A1 beschriebene Polyestercarbonat, welches über ein zweistufiges Verfahren hergestellt wurde. Obwohl in den erfindungsgemäßen Beispielen mit einem leichten Isosorbidüberschuss gearbeitet wurde, entstanden dennoch Phenylendgruppen. Diese sind vorteilhaft, da OH-Endgruppen insbesondere bei den hohen Verarbeitungstemperaturen des Polymers hydrolytisch instabil sind, zu Umesterungsreaktionen führen können und zudem die Thermostabilität beeinträchtigen können.

Erfindungsgemäß wird daher ein Verfahren zur Herstellung eines Polyestercarbonats mittels Schmelzeumesterung bereitgestellt, umfassend die Schritte
(i) Reaktion mindestens einer linearen aliphatischen Dicarbonsäure und/oder mindestens einer cycloaliphatischen Dicarbonsäure mit mindestens einem Diarylcarbonat in Anwesenheit mindestens einer aliphatischen Dihydroxy-Verbindung und in Anwesenheit eines ersten Katalysators und/oder eines zweiten Katalysators und
(ii) weitere Aufkondensation des aus Verfahrensschritt (i) erhaltenen Gemisches in Anwesenheit des ersten und des zweiten Katalysators zumindest unter Entfernung der bei der Kondensation abgespaltenen chemischen Verbindung,

wobei der erste Katalysator mindestens eine tertiäre Stickstoffbase ist,
wobei der zweite Katalysator mindestens ein basisch wirkendes Alkalimetallsalz ist
und wobei der Anteil der Alkalimetallkationen in Verfahrensschritt (ii) 0,0008 bis 0,0030 Gew.-%, bezogen auf alle im Verfahrensschritt (i) eingesetzten Komponenten, beträgt.

Ebenso wird erfindungsgemäß ein Verfahren zur Herstellung eines Polyestercarbonats mittels Schmelzeumesterung bereitgestellt, umfassend die Schritte
(i) Reaktion mindestens einer cycloaliphatischen Dicarbonsäure mit mindestens einem Diarylcarbonat in Anwesenheit mindestens einer aliphatischen Dihydroxy-Verbindung und in Anwesenheit eines ersten Katalysators und/oder eines zweiten Katalysators und
(ii) weitere Aufkondensation des aus Verfahrensschritt (i) erhaltenen Gemisches in Anwesenheit des ersten und des zweiten Katalysators zumindest unter Entfernung der bei der Kondensation abgespaltenen chemischen Verbindung,

wobei der erste Katalysator mindestens eine tertiäre Stickstoffbase ist,
wobei der zweite Katalysator mindestens ein basisch wirkendes Alkalimetallsalz ist
und wobei der Anteil der Alkalimetallkationen in Verfahrensschritt (ii) 0,0008 bis 0,0030 Gew.-%, bezogen auf alle im Verfahrensschritt (i) eingesetzten Komponenten, beträgt.

Der Anteil der Alkalimetallkationen im erfindungsgemäßen Verfahrensschritt (ii) beträgt bevorzugt 0,0009 bis 0,0025 Gew.-% und besonders bevorzugt 0,0010 bis 0,0020 Gew.-%, jeweils bezogen auf alle im Verfahrensschritt (i) eingesetzten Komponenten.

In bevorzugter Ausführungsform sind der erste Katalysator und der zweite Katalysator in Verfahrensschritt (i) anwesend.

Es ist auch möglich, in Verfahrensschritt (i) eine Teilmenge des ersten Katalysators und / oder eine Teilmenge des zweiten Katalysators einzusetzen und dann den jeweiligen Rest in Verfahrensschritt (ii).

Bevorzugt wird aber in Verfahrensschritt (i) die Gesamtmenge des ersten und / oder des zweiten Katalysators eingesetzt. Am meisten bevorzugt wird in Verfahrensschritt (i) die Gesamtmenge beider Katalysatoren eingesetzt.

Erfindungsgemäß findet in Verfahrensschritt (i) zumindest die Reaktion mindestens einer linearen aliphatischen Dicarbonsäure und/oder mindestens einer cycloaliphatischen Dicarbonsäure mit mindestens einem Diarylcarbonat statt. Jedoch kann erfindungsgemäß nicht ausgeschlossen werden, dass noch weitere Reaktion durch die Anwesenheit der mindestens einen aliphatischen Dihydroxy-Verbindung entstehen. Bevorzugt wird jedoch erfindungsgemäß der Verfahrensschritt (i) so lang durchgeführt, bis ein wesentliches Abklingen der Gasbildung beobachtet werden kann, und dann wird erst Verfahrensschritt (ii) beispielsweise durch Anlegen eines Vakuums zur Entfernung der bei der Kondensation abgespaltenen chemischen Verbindung initiiert. Wie bereits oben ausgeführt, können die Verfahrensschritte (i) und (ii) jedoch gegebenenfalls erfindungsgemäß nicht scharf voneinander getrennt werden.

### Verfahrensschritt (i)

Das erfindungsgemäße Verfahren wird als Direktsynthese oder auch one-pot-Synthese bezeichnet, da in Verfahrensschritt (i) bereits alle das spätere Polyestercarbonat aufbauenden Strukturelemente als Monomere anwesend sind. Dies bedeutet bevorzugt, dass erfindungsgemäß alle aliphatischen Dihydroxy-Verbindungen, alle linearen aliphatischen und / oder cycloaliphatischen Dicarbonsäuren und auch alle Diarylcarbonate in diesem Schritt anwesend sind, selbst wenn es sich um mehr als nur jeweils eine Dihydroxy-Verbindung, lineare aliphatische und / oder cycloaliphatische Dicarbonsäure und/oder ein Diarylcarbonat handelt. Damit ist es erfindungsgemäß bevorzugt, dass bereits während des Verfahrensschritts (i) alle Monomere, die in Verfahrensschritt (ii) zum Polyestercarbonat aufkondensiert werden, anwesend sind. Erfindungsgemäß ebenfalls umfasst kann die Ausführungsform sein, in der ein geringer Anteil des mindestens einen Diarylcarbonats zusätzlich in Verfahrensschritt (ii) zugegeben wird. Dies kann gezielt dazu eingesetzt werden, um den OH-Endgruppengehalt des entstehenden Polyestercarbonats zu reduzieren. Ein solches Vorgehen ist beispielsweise in der JP2010077398 A beschrieben. Hierbei ist es jedoch erforderlich, dass das in geringen Mengen in Verfahrensschritt (ii) hinzugefügte mindestens eine Diarylcarbonat dem in Verfahrensschritt (i) anwesenden mindestens einem Diarylcarbonat entspricht, damit immer noch alle das spätere Polyestercarbonat aufbauenden Strukturelemente als Monomere in Verfahrensschritt (i) anwesend und keine weiteren Strukturelemente zugefügt werden. In diesem Sinne kann also immer noch von einer Direktsynthese oder one-pot-Synthese gesprochen werden.

Des Weiteren ist es erfindungsgemäß auch nicht ausgeschlossen, dass aromatische Dihydroxyverbindungen und/oder aromatische Dicarbonsäuren in Verfahrensschritt (i) vorhanden sind. Diese sind bevorzugt jedoch nur zu geringen Anteilen vorhanden. Besonders bevorzugt sind in Verfahrensschritt (i) zusätzlich bis zu 20 mol-%, weiterhin bevorzugt bis zu 10 mol-% und ganz besonders bevorzugt bis zu 5 mol-% einer aromatischen Dihydroxy-Verbindung in Bezug auf die gesamte Stoffmenge der eingesetzten Dihydroxy-Verbindung vorhanden. Ebenso ist es besonders bevorzugt, dass in Verfahrensschritt (i) zusätzlich, gegebenenfalls auch zusätzlich zur aromatischen Dihydroxy-Verbindung bis zu 20 mol-%, weiterhin bevorzugt bis zu 10 mol-% und ganz besonders bevorzugt bis zu 5 mol-% einer aromatischen Dicarbonsäure in Bezug auf die gesamte Stoffmenge der eingesetzten Dicarbonsäure vorhanden ist. In diesen Fällen wird erfindungsgemäß bevorzugt immer noch von einem aliphatischen Polyestercarbonat gesprochen. Besonders bevorzugt wird jedoch keine aromatische Dihydroxy-Verbindung in Verfahrensschritt (i) eingesetzt. Ebenso bevorzugt wird keine aromatische Dicarbonsäure in Verfahrensschritt (i) eingesetzt. Genauso ist es bevorzugt, dass in Verfahrensschritt (i) weder eine aromatische Dihydroxy-Verbindung noch eine aromatische Dicarbonsäure eingesetzt wird.

Diese zusätzlichen aromatischen Dihydroxy-Verbindungen werden bevorzugt ausgewählt aus der Gruppe, bestehend aus Bisphenol A, 1,1-Bis-(4-hydroxyphenyl)-3,3,5-trimethylcyclohexan, 4,4`-Dihydroxybiphenyl (DOD), 4,4`-Dihydroxybiphenylether (DOD-Ether), Bisphenol B, Bisphenol M, den Bisphenolen (I) bis (III) 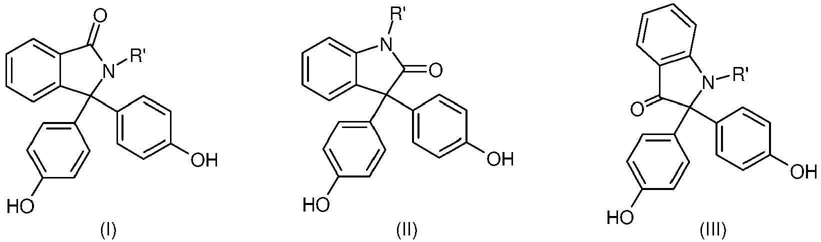 wobei in diesen Formeln (I) bis (III) R' jeweils für C1-C4-Alkyl, Aralkyl oder Aryl, bevorzugt für Methyl oder Phenyl, ganz besonders bevorzugt für Methyl, steht.

Diese zusätzlichen aromatischen Dicarbonsäuren werden bevorzugt ausgewählt aus der Gruppe, bestehend aus Isophthalsäure, Terephthalsäure, Furandicarbonsäure und 2,6-Napthalindicarbonsäure. Es ist bekannt, dass geringe Anteile an diesen aromatischen Disäuren die Wasseraufnahme eines aliphatischen Polyestercarbonats verringern können.

Erfindungsgemäß wird in Verfahrensschritt (i) mindestens eine aliphatische Dihydroxy-Verbindung eingesetzt. Diese mindestens eine aliphatische Dihydroxy-Verbindung wird bevorzugt ausgewählt aus der Gruppe, bestehend aus 1,2-Cyclohexandiol, 1,3-Cyclohexandiol, 1,4-Cyclohexandiol, 1,2-Cyclohexandimethanol, 1,3-Cyclohexandimethanol, 1,4-Cyclohexandimethanol, Tricyclodecandimethanol, 3,9-bis(1,1-Dimethyl-2-hydroxyethyl)-2,4,8,10-tetraoxaspiro[5.5]undecane, 2,2-bis(4-Hydroxycyclohexyl)propan, Tetrahydro-2,5-furandimethanol und 1,4:3,6-Dianhydrohexitolen wie Isomannid, Isoidid und Isosorbid. Es können auch beliebige Mischungen eingesetzt werden. Dabei ist die mindestens eine aliphatische Dihydroxy-Verbindung ganz besonders bevorzugt Isosorbid.

Ebenso wird in Verfahrensschritt (i) erfindungsgemäß mindestens eine lineare aliphatische und / oder mindestens eine cycloaliphatische Dicarbonsäure eingesetzt. Bevorzugt wird mindestens eine cycloaliphatische Dicarbonsäure eingesetzt. Ebenso bevorzugt wird mindestens eine lineare aliphatische Dicarbonsäure eingesetzt. Ebenso bevorzugt wird eine Mischung aus einer linearen aliphatischen Dicarbonsäure und einer cycloaliphatischen Dicarbonsäure eingesetzt.

Es ist insbesondere bevorzugt, dass die mindestens eine lineare aliphatische Dicarbonsäure und/oder die mindestens eine cycloaliphatische Dicarbonsäure dargestellt wird durch die allgemeine Formel (1): 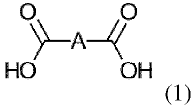 in der A für R₃ steht oder für eine der Formeln (Ia) oder (Ib),
wobei R₃ für eine lineare Alkylen-Gruppe mit 3 bis 16 Kohlenstoffatomen, bevorzugt 3 bis 8 Kohlenstoffatomen, besonders bevorzugt 3 bis 6 Kohlenstoffatomen, des Weiteren bevorzugt 3 oder 4 Kohlenstoffatomen steht und diese Alkylen-Gruppe gegebenenfalls einfach oder mehrfach substituiert sein kann oder 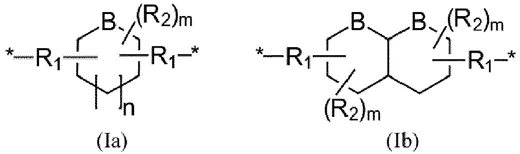 worin
B jeweils unabhängig voneinander für eine CH₂-Gruppe, für O oder für S steht,
R₁ jeweils unabhängig voneinander für eine Einfachbindung oder eine Alkylen-Gruppe mit 1 bis 10 Kohlenstoffatomen, bevorzugt eine Einfachbindung oder eine Alkylen-Gruppe mit 1 bis 9 Kohlenstoffatomen, besonders bevorzugt eine Einfachbindung oder eine Alkylen-Gruppe mit 1 bis 8 Kohlenstoffatomen steht, ebenso bevorzugt eine Einfachbindung oder eine Alkylen-Gruppe mit 1 bis 5 Kohlenstoffatomen, insbesondere bevorzugt eine Einfachbindung, steht und
R₂ jeweils unabhängig voneinander für eine Alkylen-Gruppe mit 1 bis 10 Kohlenstoffatomen, bevorzugt 1 bis 9 Kohlenstoffatomen, besonders bevorzugt 1 bis 8 Kohlenstoffatomen steht,
n eine Zahl zwischen 0 und 3, bevorzugt zwischen 0 und 2, besonders bevorzugt zwischen 0 und 1, ganz besonders bevorzugt 1 ist,
m eine Zahl zwischen 0 und 6, bevorzugt zwischen 0 und 3, besonders bevorzugt zwischen 0 und 2, ganz besonders bevorzugt 0 ist und die "^{∗}" die Positionen angeben, an denen die Carbonsäuregruppen der Formel (1) vorhanden sind.

Dabei versteht es sich, dass wenn R₁ eine Einfachbindung darstellt, R₁ somit Null Kohlenstoffatome umfasst.

Erfindungsgemäß wird der Begriff "lineare Alkylen-Gruppe" bzw. "lineare (aliphatische) Dicarbonsäure" in Abgrenzung zu einer "cycloaliphatischen Alkylen-Gruppe" bzw. "cycloaliphatischen Dicarbonsäure" verwendet. Dabei enthält die lineare Variante keinerlei Cyclus. Allerdings kann beispielsweise R₃, welches eine lineare Alklyen-Gruppe darstellt, gegebenenfalls substituiert sein. Dies führt dazu, dass die lineare Alkylen-Gruppe im Weitesten Sinne auch als "verzweigt" bezeichnet werden kann. Damit fallen unter den Begriff "lineare Alkylen-Gruppe" erfindungsgemäß bevorzugt auch "verzweigte Alkylen-Gruppen". In keinem Fall enthalten diese jedoch Cyclen.

Steht A für R₃, so ist es bevorzugt, dass R₃ für eine lineare Alkylen-Gruppe mit 3 bis 16 Kohlenstoffatomen, bevorzugt 3 bis 8 Kohlenstoffatomen, besonders bevorzugt 3 bis 6 Kohlenstoffatomen, des Weiteren bevorzugt 3 oder 4 Kohlenstoffatomen steht und diese Alkylen-Gruppe gegebenenfalls einfach oder mehrfach substituiert sein kann. Dabei kann diese Alkylen-Gruppe bevorzugt mit mindestens einer Alkylen-Gruppe, welche bevorzugt 1 bis 5 Kohlenstoffatome aufweist, substituiert sein. Besonders bevorzugt ist die lineare Alkylen-Gruppe nicht substituiert oder mit mindestens einer Alkylen-Gruppe, welche 1 bis 5 Kohlenstoffatome, bevorzugt 1 bis 4, Kohlenstoffatome, besonders bevorzugt 1 bis 3 Kohlenstoffatome aufweist, substituiert. Wenn sie substituiert ist, weist sie mindestens ein tertiäre, gegebenenfalls aber auch mindestens ein quartäres Kohlenstoffatom auf. Besonders bevorzugt ist die lineare Alkylen-Gruppe R₃ nicht substituiert oder mit einer bis drei Alkylen-Gruppen substituiert. Liegen mehr als eine Substitution vor, so kann diese an einem Kohlenstoffatom (es resultiert ein quartäres Kohlenstoffatom) oder auch an mehreren Kohlenstoffatomen (es resultieren zwei tertiäre Kohlenstoffatome) der linearen Alkylen-Gruppe R₃ vorhanden sein. Des Weiteren bevorzugt ist die lineare Alkylen-Gruppe R₃ nicht substituiert oder mit einer bis drei Methyl-Gruppen substituiert. Ganz besonders bevorzugt wird R₃ ausgewählt aus -CH₂-CH₂-CH₂-, -CH₂-CH₂-CH₂-CH₂-, -CH₂-CH₂-CH₂-CH₂-CH₂-, -CH₂-CH₂-CH₂-CH₂-CH₂-CH₂-, -CH₂-CH₂-CH₂-CH₂-CH₂-CH₂-CH₂-, -CH₂-CH₂-CH₂-CH₂-CH₂-CH₂-CH₂-CH₂-, -CH₂-C(CH₃)₂-CH₂-, -CH₂-CH(CH₃)-CH₂-C(CH₃)₂-, -CH₂-C(CH₃)₂-CH₂-CH(CH₃)- und -CH(CH₃)-CH₂-CH₂-C(CH₃)₂-. Ebenso bevorzugt wird R₃ ausgewählt aus -CH₂-CH₂-CH₂-CH₂-, -CH₂-C(CH₃)₂-CH₂-, -CH₂-CH(CH₃)-CH₂-C(CH₃)₂-, -CH₂-C(CH₃)₂-CH₂-CH(CH₃)- und -CH(CH₃)-CH₂-CH₂-C(CH₃)₂-. Ganz besonders bevorzugt steht R₃ für -CH₂-C(CH₃)₂-CH₂- (3,3-Dimethylglutarsäure).

Steht A für eine der Formeln (la) oder (Ib), dann ist es bevorzugt, dass
B jeweils unabhängig voneinander für eine CH₂-Gruppe, für O oder für S steht, bevorzugt für eine CH₂-Gruppe steht,
R₁ jeweils unabhängig voneinander für eine Einfachbindung oder eine lineare Alkylen-Gruppe mit 1 bis 10 Kohlenstoffatomen, insbesondere bevorzugt eine Einfachbindung, steht und
R₂ jeweils unabhängig voneinander für eine lineare Alkylen-Gruppe mit 1 bis 10 Kohlenstoffatomen, bevorzugt 1 bis 9 Kohlenstoffatomen, besonders bevorzugt 1 bis 8 Kohlenstoffatomen steht,
n eine Zahl zwischen 0 und 3, bevorzugt zwischen 0 und 2, besonders bevorzugt zwischen 0 und 1, ganz besonders bevorzugt 1 ist,
m eine Zahl zwischen 0 und 6, bevorzugt zwischen 0 und 3, besonders bevorzugt zwischen 0 und 2, ganz besonders bevorzugt 0 ist und die "^{∗}" die Positionen angeben, an denen die Carbonsäuregruppen der Formel (1) vorhanden sind.

Aus der Anzahl von m ist bereits ersichtlich, dass es in den Formeln (Ia) und (Ib) möglich ist, dass zwei R₂ an jeweils einem Kohlenstoffatom oder aber auch ein R₁-^{∗} und ein R₂ an jeweils einem Kohlenstoffatom vorhanden sind. Ebenso ist es möglich, dass immer nur ein Substituent R₁-^{∗} oder R₂ an einem Kohlenstoffatom vorhanden ist.

Insbesondere ist es bevorzugt, dass es sich bei der cycloaliphatischen Dicarbonsäure um hydrierte Dimerfettsäure oder eine Verbindung der Formel (IIa), (IIb) oder Mischungen davon handelt. Dem Fachmann sind hydrierte Dimerfettsäuren bekannt. Dabei ist es insbesondere bekannt, dass sich es sich um eine Mischung unterschiedlicher Verbindungen handeln kann. Diese Mischung kann auch cycloaliphatische sowie lineare Verbindungen enthalten. Diese sind erfindungsgemäß durch die Verwendung mindestens einer linearen aliphatischen Dicarbonsäure und mindestens einer cycloaliphatischen Dicarbonsäure umfasst.

Damit wird bevorzugt hydrierte Dimerfettsäure als erfindungsgemäße lineare aliphatische und/oder cyloaliphatische Dicarbonsäure eingesetzt.

Es ist bevorzugt, dass die mindestens eine cycloaliphatische Dicarbonsäure ausgewählt ist aus einer Verbindung der chemischen Formel (IIa), (IIb) oder Mischungen davon 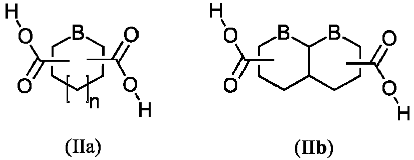 worin
B jeweils unabhängig voneinander für ein Kohlenstoffatom oder ein Heteroatom, welches ausgewählt ist aus der Gruppe, bestehend aus O und S, steht, bevorzugt für eine CH₂-Gruppe oder ein Heteroatom, welches ausgewählt ist aus der Gruppe, bestehend aus O und S, steht und n eine Zahl zwischen 0 und 3 ist. Dabei ist es des Weiteren bevorzugt, dass B für ein Kohlenstoffatom oder O steht, bevorzugt für eine CH₂-Gruppe oder O steht und n eine Zahl zwischen 0 und 3, bevorzugt 0 oder 1 ist.

Insbesondere ist es bevorzugt, dass die mindestens eine lineare aliphatische Dicarbonsäure ausgewählt ist aus der Gruppe, bestehend aus 2,2,4-Trimethyladipinsäure, 2,4,4-Trimethyladipinsäure, 2,2,5-Trimethyladipinsäure und 3,3-Dimethylglutarsäure. Ganz besonders bevorzugt handelt es sich um 3,3-Dimethylglutarsäure.

Insbesondere ist es bevorzugt, dass die mindestens eine cycloaliphatische Dicarbonsäure ausgewählt ist aus der Gruppe, bestehend aus 1,4-Cyclohexandicarbonsäure, 1,3-Cyclohexandicarbonsäure, 1,2-Cyclohexandicarbonsäure, Tetradihydro-2,5-furandicarbonsäure, Tetradihydro-2,5-dimethyl-furandicarbonsäure, Decahydro-2,4-naphtalindicarbonsäure, Decahydro-2,5-naphtalindicarbonsäure, Decahydro-2,6-naphtalindicarbonsäure, Decahydro-2,7-naphtalindicarbonsäure und hydrierter Dimerfettsäure. Ebenso ist es bevorzugt, dass die mindestens eine cycloaliphatische Dicarbonsäure ausgewählt ist aus der Gruppe, bestehend aus 1,4-Cyclohexandicarbonsäure, 1,3-Cyclohexandicarbonsäure, 1,2-Cyclohexandicarbonsäure, Tetradihydro-2,5-furandicarbonsäure, Tetradihydro-2,5-dimethyl-furandicarbonsäure, Decahydro-2,4-naphtalindicarbonsäure, Decahydro-2,5-naphtalindicarbonsäure, Decahydro-2,6-naphtalindicarbonsäure und Decahydro-2,7-naphtalindicarbonsäure. Es können auch beliebige Mischungen eingesetzt werden. Ganz besonders bevorzugt handelt es sich um 1,4-Cyclohexandicarbonsäure, 1,3-Cyclohexandicarbonsäure oder 1,2-Cyclohexandicarbonsäure.

Insbesondere ist es des Weiteren bevorzugt, dass eine Mischung aus einer linearen aliphatischen Dicarbonsäure und einer cycloaliphatischen Dicarbonsäure verwendet wird. Dabei ist es insbesondere bevorzugt, dass die mindestens eine lineare aliphatische Dicarbonsäure ausgewählt ist aus der Gruppe, bestehend aus 2,2,4-Trimethyladipinsäure, 2,4,4-Trimethyladipinsäure, 2,2,5-Trimethyladipinsäure und 3,3-Dimethylglutarsäure und dass die mindestens eine cycloaliphatische Dicarbonsäure ausgewählt ist aus der Gruppe, bestehend aus 1,4-Cyclohexandicarbonsäure, 1,3-Cyclohexandicarbonsäure, 1,2-Cyclohexandicarbonsäure, Tetradihydro-2,5-furandicarbonsäure, Tetradihydro-2,5-dimethyl-furandicarbonsäure, Decahydro-2,4-naphtalindicarbonsäure, Decahydro-2,5-naphtalindicarbonsäure, Decahydro-2,6-naphtalindicarbonsäure, Decahydro-2,7-naphtalindicarbonsäure und hydrierter Dimerfettsäure. Insbesondere ist eine Mischung aus 3,3-Dimethylglutarsäure und 1,4-Cyclohexandicarbonsäure, 1,3-Cyclohexandicarbonsäure oder 1,2-Cyclohexandicarbonsäure bevorzugt.

Ebenso wird in Verfahrensschritt (i) erfindungsgemäß mindestens ein Diarylcarbonat eingesetzt. Dabei ist es bevorzugt, dass das mindestens eine Diarylcarbonat ausgewählt wird aus der Gruppe, bestehend aus einer Verbindung der Formel (2) 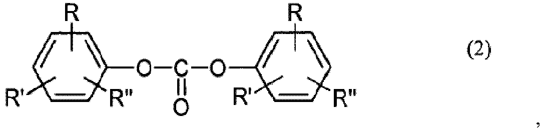 worin
R, R' und R" jeweils unabhängig voneinander gleich oder verschieden sein können und für Wasserstoff, gegebenenfalls verzweigtes C1-C34Alkyl, C7-C34-Alkylaryl, C6-C34-Aryl, eine Nitrogruppe, eine Carbonyl-enthaltende Gruppe, eine Carboxyl-enthaltende Gruppe oder eine Halogengruppe stehen. Bevorzugt handelt es sich bei dem mindestens einen Diarylcarbonat um Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1 -Methyl-1 -phenylethyl)-phenyl-phenyl-carbonat, Di-[4-(1-methyl-1-phenylethyl)-phenyl]-carbonat, Bis(methylsalicyl)carbonat, Bis(ethylsalicyl)carbonat, Bis(propylsalicyl)carbonat, Bis(2-benzoylphenylcarbonat), Bis(phenylslicyl)carbonat und/oder Bis(benzylsalicyl)carbonat. Insbesondere bevorzugt handelt es sich bei dem mindestens einen Diarylcarbonat um Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1 -Methyl-1 -phenylethyl)-phenyl-phenyl-carbonat und/oder Di-[4-(1-methyl-1-phenylethyl)-phenyl]-carbonat. Besonders bevorzugt ist das mindestens eine Diarylcarbonat Diphenylcarbonat.

Des Weiteren ist in Verfahrensschritt (i) erfindungsgemäß ein erster Katalysator und / oder ein zweiter Katalysator anwesend.

Bei dem erstem Katalysator handelt es sich um eine tertiäre Stickstoffbase. Bevorzugt ist dieser erste Katalysator ausgewählt aus von Guanidin abgeleiteten Basen, 4-Dimethylaminopyridin (DMAP), 1,8-Diazabicyclo[5.4.0]undec-7-en, 1,5-Diazabicyclo[4.3.0]non-5-en, 1,5,7-Triazabicyclo[4.4.0]dec-5-en, Hexamethylphosphorimidtriamid, 1,2 Dimethyl-1,4,5,6-tretrahydropyridin, 7-Methyl-1,5,7-triazabicyclodec-5-en, 1,8-Diazabicyclo[5.4.0]undec-7-en (DBU), DBN, Ethylimidazol, N,N-Di-isopropyl ethylamin (Hünigs Base), Pyridin, TMG sowie Mischungen dieser Substanzen. Weiter bevorzugt wird der erste Katalysator ausgewählt aus Guanidin abgeleiteten Basen, 4-Dimethylaminopyridin (DMAP), 1,8-Diazabicyclo[5.4.0]undec-7-en, 1,5-Diazabicyclo[4.3.0]non-5-en, 1,5,7-Triazabicyclo[4.4.0]dec-5-en. Besonders bevorzugt wird 4-Dimethylaminopyridin eingesetzt.

Der erste Katalysator wird bevorzugt in einer Menge von 0,002 bis 0,10 Gew.-%, weiter bevorzugt in einer Menge von 0,005 bis 0,050 Gew, besonders bevorzugt in einer Menge von 0,008 bis 0,030 Gew, jeweils bezogen auf alle im Verfahrensschritt (i) eingesetzten Komponenten.

Bei den in Verfahrensschritt (ii) enthaltenen Alkalimetallkationen handelt es sich bevorzugt um Lithiumkationen, Kaliumkationen, Natriumkationen, Cäsiumkationen und Mischungen daraus.

Der eingesetzte zweite Katalysator ist das organische oder anorganische Alkali- oder Erdalkalisalz einer schwachen Säure (pKs zwischen 3 und 7 bei 25 °C). Geeignete schwache Säuren sind z.B. Carbonsäuren, bevorzugt C2- C22 Carbonsäuren, wie Essigsäure, Proprionsäure, Ölsäure, Stearinsäure, Laurinsäure, Benzoesäure, 4-Methoxybenzoesäure, 3-Methylbenzoesäure, 4-tert.-Butylbenzoesäure, p-Toluolessigsäure, 4-Hydroxybenzoesäure, Salicylsäure, Teilester von Polycarbonsäuren, wie z.B. Monoester von Bernsteinsäure , verzweigte aliphatische Carbonsäuren, wie 2,2-Dimethylpropansäure, 2,2-Dimethylpropansäure, 2,2- Dimethylbutansäure, 2-Ethylhexansäure.

Geeignete organische und anorganische Salze sind oder sind abgeleitet von Natriumhydrogencarbonat, Kaliumhydrogencarbonat, Lithiumhydrogencarbonat, Natriumcarbonat, Lithiumcarbonat, Kaliumcarbonat, Natriumacetat, Kaliumacetat, Lithiumacetat, Natriumstearat, Kaliumstearat, Lithiumstearat, Natriumoleat, Lithiumoleat, Kaliumoleat, Natriumbenzoat, Kaliumbenzoat, Lithiumbenzoat, Dinatrium-, Dikalium-, und Dilithiumsalze von BPA. Ferner können Calciumhydrogencarbonat, Bariumhydrogencarbonat, Magnesiumhydrogencarbonat, Strontiumhydrogencarbonat, Calciumcarbonat, Bariumcarbonat, Magnesiumcarbonat, Strontiumcarbonat, Calciumacetat, Bariumacetat, Magnesiumacetat, Strontiumacetat, Calciumstearat, Bariumstearat, Magnesiumstearat und entsprechende Oleate eingesetzt werden. Weiterhin können entsprechende Salze von Phenolen, insbesondere von Phenol eingesetzt werden. Diese Salze können einzeln oder im Gemisch eingesetzt werden.

Der zweite Katalysator ist bevorzugt ausgewählt aus der Gruppe bestehend aus Natriumhydroxid, Lithiumhydroxid, Natriumphenolat, Lithiumphenolat, Natriumbenzoat, Lithiumbenzoat, Lithiumchlorid, Lithiumacetylacetonat und Cäsiumcarbonat sowie Mischungen dieser Substanzen. Besonders bevorzugt werden Natriumphenolat, Lithiumphenolat, Natriumhydroxyd, Lithiumhydroxyid, Natriumbenzoat, Lithiumbenzoat, Lithiumchlorid und/oder Lithiumacetylcetonat eingesetzt. Lithiumchlorid wird bevorzugt als wässrige Lösung eingesetzt, beispielsweise in Form einer 15-%igen Lösung.

Der zweite Katalysator ist ebenso bevorzugt ausgewählt aus der Gruppe bestehend aus Natriumhydroxid, Natriumphenolat, Natriumbenzoat und Cäsiumcarbonat sowie Mischungen dieser Substanzen. Besonders bevorzugt werden Natriumphenolat, Natriumhydroxyd und/oder Natriumbenzoat eingesetzt. Natriumbenzoat wird bevorzugt als wässrige Lösung eingesetzt, beispielsweise in Form einer 15-%igen Lösung.

Es wurde festgestellt, dass das molare Verhältnis aller in Verfahrensschritt (i) anwesenden aliphatischen Dihydroxy-Verbindungen zu allen in Verfahrensschritt (i) anwesenden cycloaliphatischen Dicarbonsäuren vor der Reaktion in Verfahrensschritt bevorzugt (i) 1:0,6 bis 1:0,05, weiter bevorzugt 1:0,5 bis 1:0,15 und ganz besonders bevorzugt 1:0,4 bis 1:0,2 beträgt.

Bevorzugt soll das Verhältnis von aliphatischen Dihydroxy-Verbindungen und cycloaliphatischen Dicarbonsäuren im späteren Polyestercarbonat nicht zu hoch sein (d.h. nicht zu wenig cycloaliphatischen Dicarbonsäuren eingebaut), um besonders günstige mechanische Eigenschaften, gute Chemikalienbeständigkeit und gute Verarbeitungseigenschaften zu erreichen.

Des Weiteren umfasst der erfindungsgemäße Verfahrensschritt (i) bevorzugt mindestens einen, besonders bevorzugt alle der folgenden Schritte (ia) bis (ic):
(ia) Aufschmelzen aller in Verfahrensschritt (i) anwesenden Komponenten, also mindestens der mindestens einen linearen aliphatischen und / oder mindestens einen cycloaliphatischen Dicarbonsäure, des mindestens einen Diarylcarbonats und der mindestens einen aliphatischen Dihydroxyverbindung in Anwesenheit des mindestens einen Katalysators. Dies erfolgt bevorzugt unter Schutzgasatmosphäre, bevorzugt unter Stickstoff und/oder Argon. Bevorzugt erfolgt der Schritt (ia) in Abwesenheit eines Lösungsmittels. Der Begriff "Lösungsmittel" ist in diesem Zusammenhang dem Fachmann bekannt. Erfindungsgemäß wird unter dem Begriff "Lösungsmittel" bevorzugt eine Verbindung verstanden, die in keinem der Verfahrensschritte (i) und (ii) eine chemische Reaktion eingeht. Ausgenommen sind solche Verbindungen, welche durch die Reaktion entstehen (beispielsweise Phenol, wenn Diphenylcarbonat als das mindestens eine Diarylcarbonat eingesetzt wird). Selbstverständlich kann nicht ausgeschlossen werden, dass die Ausgangsverbindungen Spuren von Lösungsmitteln enthalten. Dieser Fall soll erfindungsgemäß bevorzugt umfasst sein. Jedoch wird erfindungsgemäß bevorzugt ein aktiver Schritt der Zugabe eines solchen Lösungsmittels vermieden.
(ib) Erhitzen des Gemisches, bevorzugt der aus Schritt (ia) erhaltenen Schmelze. Dabei können Schritt (ia) und Schritt (ib) auch überlappen, da zur Erzeugung einer Schmelze in Schritt (ia) ebenfalls ein Erhitzen notwendig sein kann. Das Erhitzen erfolgt bevorzugt zunächst auf 150 °C bis 180 °C.
(ic) Reaktion des Gemisches, bevorzugt des aus Schritt (ib) erhaltenen Gemisches unter Einbringung von Mischenergie, bevorzugt durch Rühren. Auch hier kann der Schritt (ic) mit dem Schritt (ib) überlappen, da durch das Erhitzen bereits die Reaktion des Gemisches initiiert werden kann. Bevorzugt ist die Schmelze dabei bereits durch Schritt (ib) unter Normaldruck auf Temperaturen zwischen 150 und 180 °C aufgeheizt. Je nach gewähltem Katalysator kann die Temperatur im Bereich 160 - 200 °C belassen werden. Alternativ wird die Temperatur in Schritt (ic) schrittweise - je nach beobachteter Reaktivität - auf 200°C - 300 °C, bevorzugt 210 - 260 °C, insbesondere bevorzugt 215 - 240 °C erhöht. Die Reaktivität kann über die Gasentwicklung auf dem Fachmann bekannte Weise abgeschätzt werden. Prinzipiell sind auch höhere Temperaturen in diesem Schritt möglich, jedoch kann es bei höheren Temperaturen zu Nebenreaktionen kommen (z.B. Verfärbungen). Daher sind höhere Temperaturen weniger bevorzugt. Man rührt solange unter Normaldruck, bis die Gasentwicklung im Wesentlichen stoppt. Erfindungsgemäß ist es möglich, dass unter diesen Bedingungen der durch die Reaktion der mindestens einen Carbonsäure mit dem mindestens einen Diarylcarbonat enstehende Arylalkohol (beispielsweise Phenol bei der Verwendung von Diphenylcarbonat) bereits teilweise mit entfernt wird.

Ebenso wurde erfindungsgemäß beobachtet, dass die mindestens eine Dihydroxyverbindung ebenfalls zu diesem Zeitpunkt schon Reaktionen eingegangen ist. So konnten Oligomere, umfassend Carbonateinheiten aus der Reaktion der mindestens einen Dihydroxy-Verbindung mit dem mindestens einen Diarylcarbonat und/oder Estereinheiten aus der Reaktion der mindestens einen Dihydroxy-Verbindung mit der mindestens einen Dicarbonsäure nachgewiesen werden.

Daher ist es erfindungsgemäß bevorzugt, dass das aus Verfahrensschritt (i) erhaltene Gemisches vor Durchführung des Verfahrensschritts (ii) Oligomere, umfassend Carbonateinheiten aus der Reaktion der mindestens einen Dihydroxy-Verbindung mit dem mindestens einen Diarylcarbonat und/oder Estereinheiten aus der Reaktion der mindestens einen Dihydroxy-Verbindung, umfasst.

Die Reaktionszeit in Schritt (ic) hängt von der Menge der Einsatzstoffe ab. Bevorzugt liegt die Reaktionszeit des Schritts (ic) zwischen 0,5 h bis 24 h, bevorzugt zwischen 0,75 h und 5 h und insbesondere bevorzugt zwischen 1 h und 3 h. Dabei ist es bevorzugt, die Reaktionszeit so zu wählen, dass die Gasentwicklung im Wesentlichen nachgelassen hat (siehe Reaktionsschema oben).

Erfindungsgemäß ist es bevorzugt, dass das molare Verhältnis der Summe aller in Verfahrensschritt (i) anwesenden aliphatischen Dihydroxy-Verbindungen und aller in Verfahrensschritt (i) anwesenden linearen aliphatischen und/oder cycloaliphatischen Dicarbonsäuren zu allen in Verfahrensschritt (i) anwesenden Diarylcarbonaten vor der Reaktion in Verfahrensschritt (i) 1:0,4 bis 1:1,6 , bevorzugt 1:0,5 bis 1:1,5, weiterhin bevorzugt, 1:0,6 bis 1:1,4, besonders bevorzugt 1:0,7 bis 1:1,3, insbesondere bevorzugt 1:0,8, bis 1:1,2 und ganz besonders bevorzugt 1:0,9 bis 1: 1,1 beträgt. Der Fachmann ist in der Lage, entsprechende optimal geeignete Verhältnisse je nach Reinheit der Ausgangssubstanzen auszuwählen.

### Verfahrensschritt (ii)

In Verfahrensschritt (ii) erfolgt die weitere Aufkondensation des aus Verfahrensschritt (i) erhaltenen Gemisches zumindest unter Entfernung der bei der Kondensation abgespaltenen chemischen Verbindung. Unter dem Ausdruck "weitere" Aufkondensation ist erfindungsgemäß zu verstehen, dass in Verfahrensschritt (i) zumindest teilweise bereits eine Kondensation stattgefunden hat. Dabei handelt es sich bevorzugt um die Reaktion der mindestens einen linearen aliphatischen und / oder mindestens einen cycloaliphatischen Dicarbonsäure mit dem mindestens einen Diarylcarbonat unter Abspaltung eines Arylalkohols. Bevorzugt hat jedoch auch schon eine weitere Kondensation hin zu Oligomeren stattgefunden (siehe dazu Verfahrensschritt (i)).

Wenn im Verfahrensschritt (i) nur der erste Katalysator oder nur der zweite Katalysator eingesetzt wurde, so wird der im Verfahrensschritt (i) nicht eingesetzte Katalysator im Verfahrensschritt (ii) hinzugefügt.

Der Begriff "Kondensation" ist dem Fachmann bekannt. Bevorzugt wird hierunter eine Reaktion verstanden, bei der sich zwei Moleküle (des gleichen Stoffes oder verschiedener Stoffe) zu einem größeren Molekül vereinigen, wobei ein Molekül einer chemisch einfachen Substanz abgespalten wird. Diese bei der Kondensation abgespaltene Verbindung wird in Verfahrensschritt (ii) entfernt. Dabei ist es bevorzugt, dass die bei der Kondensation abgespaltenen chemischen Verbindung in Verfahrensschritt (ii) mittels Vakuum entfernt wird. Demgemäß ist es bevorzugt, dass das erfindungsgemäße Verfahren dadurch gekennzeichnet ist, dass während der Reaktion in Verfahrensschritt (i) die flüchtigen Bestandteile, welche einen Siedepunkt unterhalb des in Verfahrensschritt (i) gebildeten cycloaliphatischen Diesters, der mindestens einen aliphatischen Dihydroxy-Verbindung und unterhalb des mindestens einen Diarylcarbonats aufweisen, gegebenenfalls unter schrittweiser Reduzierung des Drucks abgetrennt werden. Eine schrittweise Abtrennung wird dabei bevorzugt gewählt, wenn unterschiedliche flüchtige Bestandteile abgetrennt werden. Ebenso bevorzugt wird eine schrittweise Abtrennung gewählt, um eine möglichst vollständige Abtrennung des oder der flüchtigen Bestandteils/e zu gewährleisten. Bei den flüchtigen Bestandteilen handelt es sich um die bei der Kondensation abgespaltenen chemischen Verbindung bzw. Verbindungen.

Eine schrittweise Absenkung des Drucks kann z.B. derart erfolgen, dass sobald die Kopftemperatur fällt der Druck gesenkt wird, um eine kontinuierliche Entfernung der bei der Kondensation abgespaltenen chemischen Verbindung zu gewährleisten. Wenn ein Druck von 1 mbar, bevorzugt <1mbar erreicht ist, wird weiterhin kondensiert, bis die gewünschte Viskosität erreicht ist. Dies kann z.B. durch Drehmomentkontrolle erfolgen d.h. die Polykondensation wird bei Erreichen des gewünschten Drehmoments des Rührers abgebrochen.

Die Abtrennung des Kondensationsproduktes in Verfahrensschritt (ii) erfolgt bevorzugt bei Temperaturen von 200 °C bis 280 °C, besonders bevorzugt 210 °C bis 260 °C und insbesondere bevorzugt 220 °C bis 250 °C. Weiterhin bevorzugt beträgt das Vakuum bei der Abtrennung 500 mbar bis 0,01 mbar. Insbesondere ist es bevorzugt, dass die Abtrennung schrittweise durch Reduktion des Vakuums erfolgt. Ganz besonders bevorzugt beträgt das Vakuum in der letzten Stufe 10 mbar bis 0,01 mbar.

In einem weiteren Aspekt der vorliegenden Erfindung wird ein Polyestercarbonat bereitgestellt, welches erhalten durch das oben beschriebene erfindungsgemäße Verfahren in sämtlichen offenbarten Kombinationen und Bevorzugungen. Das erfindungsgemäße Polyestercarbonat kann als solches zu Formkörpern aller Art verarbeitet werden. Es kann auch mit anderen Thermoplasten und/oder Polymeradditiven zu thermoplastischen Formmassen verarbeitet werden. Die Formmassen und Formkörper sind weitere Gegenstände der vorliegenden Erfindung.

Die Polymeradditive werden bevorzugt aus der Gruppe bestehend aus Flammschutzmitteln, Antidrippingmitteln, Flammschutzsynergisten, Rauchinhibitoren, Gleit- und Entformungsmitteln, Nukleiermitteln, Antistatika, Leitfähigkeitsadditiven, Stabilisatoren (z.B. Hydrolyse-, Wärmealterungs- und UV-Stabilisatoren sowie Umesterungsinhibitoren), Fließfähigkeitspromotoren, Phasenverträglichkeitsvermittlern, Farbstoffen und Pigmenten, Schlagzähigkeitsmodifikatoren sowie Füll- und Verstärkungsstoffen.

Die thermoplastischen Formmassen können beispielsweise hergestellt werden, indem man das Polyestercarbonat und die weiteren Bestandteile in bekannter Weise vermischt und bei Temperaturen von bevorzugt 200°C bis 320°C, in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.

Unter Formmasse wird also das Produkt verstanden, das erhaltend wird, wenn die Bestandteile der Zusammensetzung schmelzcompoundiert und schmelzextrudiert werden.

Die Formkörper aus dem erfindungsgemäßen Polyestercarbonat oder den das Polyestercarbonat enthaltenden thermoplastischen Formmassen können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

### Beispiele

### Verwendete Materialien:

Cyclohexandicarbonsäure: 1,4-Cyclohexandicarbonsäure; CAS 1076-97-7 99 %; Tokyo Chemical Industries, Japan, abgekürzt als CHDA. Die CHDA enthielt gemäß einer Elementaranalyse weniger als 1ppm Natrium
Diphenylcarbonat: Diphenylcarbonat, 99,5 %, CAS 102-09-0; Acros Organics, Geel, Belgien, abgekürzt als DPC
4-Dimethylaminopyridin: 4-(Dimethylaminopyridin; ≥98,0 %; purum; CAS 1122-58-3; Sigma-Aldrich, München Deutschland, abgekürzt als DMAP
Isosorbid: Isosorbid (CAS: 652-67-5), 99,8 %, Polysorb PS A; Roquette Freres (62136 Lestrem, Frankreich); abgekürzt als ISB
Natriumbenzoat: Natriumbenzoat (CAS 532-32-1); Sigma- Aldrich, München, Deutschland
3,3-Dimethylglutarsäure: (CAS 4839-46-7) ABCR GmbH, Karlsruhe, Deutschland Lithiumhydroxid (LiOH): (CAS 1310-66-3), Sigma-Aldrich, München, Deutschland

### Analytische Methoden:

### Lösungsviskosität

Bestimmung der Lösungsviskosität: Die relative Lösungsviskosität (ηrel; auch als eta rel bezeichnet) wurde in Dichlormethan bei einer Konzentration von 5 g/l bei 25 °C mit einem Ubbelohdeviskosimeter bestimmt. Die Bestimmung erfolgte nach DIN 51562-3; 1985-05. Dabei werden die Durchlaufzeiten des zu vermessenden Polyestercarbonats durch das Ubbelohde-Viskosimeter gemessen, um anschließend den Viskositätsunterschied zwischen Polymerlösung und seinem Lösungsmittel zu ermitteln. Dazu wird zunächst eine Kalibrierung des Ubbelohde-Viskosimeters mittels Vermessung der reinen Lösungsmittel Dichlormethan, Trichlorethylen und Tetrachlorethylen durchgeführt (dabei erfolgen immer mindestens 3 Messungen, höchstens 9 Messungen). Daraufhin erfolgt die eigentliche Kalibrierung mit dem Lösungsmittel Dichlormethan. Im Anschluss wird die Polymerprobe eingewogen, in Dichlormethan gelöst und für diese Lösung dann dreimal die Durchflusszeit bestimmt. Der Mittelwert der Durchflusszeiten wird über die Hagenbach-Korrektur korrigiert und die relative Lösungsviskosität errechnet.

### Beispiel 1: 10 ppm Na

17,20 g (0,10 Mol) 1,4-Cyclohexandicarbonsäure und 29,83 g (0,204 Mol) Isosorbid sowie 64,30 g ( 0,3 Mol) Diphenylcarbonat, 0,0111 g DMAP (4-Dimethylaminopyridin; 100 ppm bezogen auf die Einsatzstoffe CHDA, DPC und ISB) sowie 50,2 µl einer wässrigen Lösung von Natriumbenzoat (141,4 g/l), entsprechend ca. 10 ppm Na, wurden in einem Kolben mit Kurzwegabscheider vorgelegt. Das Gemisch wurde durch 4-faches evakuieren und belüften mit Stickstoff von Sauerstoff befreit. Das Gemisch wurde aufgeschmolzen und bei Normaldruck auf 160 °C unter Rühren erwärmt. Das Gemisch wurde für 50 Minuten bei 160 °, für 50 Minuten bei 175 °C, für 30 Minuten bei 190 °C sowie für 50 Minuten bei 205 °C gerührt. Dabei entwickelt sich kontinuierlich Kohlenstoffdioxid. Nach Versiegen der CO₂ Entwicklung wird die Badtemperatur auf 220 °C eingestellt. Nach weiteren 20 Minuten wird Vakuum angelegt. Der Druck wird innerhalb von 30 Minuten auf 10 mbar gesenkt. Dabei wird kontinuierlich Phenol entfernt. Bei 10 mbar wird ca. 10 Minuten gerührt. Dann wir d der Druck auf <1mbar (ca. 0,7 mbar) gesenkt und weitere 10 Minuten kondensiert. Danach wurde der Ansatz abgestellt.

Man erhielt ein hellbraunes Polymer mit einer Lösungsviskosität von eta rel 1,258.

Die weiteren Beispiele (Bsp.) und Vergleichsbeispiele (Vgl.) wurden wie für Beispiel 1 angegeben hergestellt, wobei lediglich die Einsatzmengen an Natriumbenzoat und DMAP variiert wurden. Die Daten sind in Tabelle 1 zusammengefasst. Angegeben sind jeweils die Gewichtsanteile in ppm an DMAP und an Alkalimetall, die sich aus den Einwaagen der eingesetzten Komponenten ergeben.

In allen Fällen wurden beide Katalysatoren in Verfahrensschritt (i) zugegeben. Die Katalysatoren verbleiben vollständig in der Reaktionsmischung. Die Anteile DMAP und Alkalimetall beziehen sich auf alle in Verfahrensschritt (i) eingesetzten Komponenten.

**Tabelle 1:**

| | DMAP [ppm] | Alkalimetall [ppm] | eta rel |
|---|---|---|---|
| Vgl. 1 | 100 | 1 | 1,018 |
| Vgl. 2 | 100 | 5 | 1,103 |
| Bsp. 1 | 100 | 10 | 1,258 |
| Bsp. 2 | 100 | 8 | 1,21 |
| Bsp. 3 | 100 | 20 | 1,293 |
| Vgl. 3 | 100 | 50 | 1,41 |
| Vgl. 4 | 0 | 10 | 1,019 |

Die Beispiele 1 bis 4 zeigen, dass das erfinderische Verfahren die gewünschten Polyestercarbonate in dem gewünschten Viskositätsfenster liefert. Ist der Gehalt an Alkaliionen zu niedrig - wie in den Vergleichsbeispielen 1 und 2 gezeigt - lässt sich nur ein ungenügender Molekulargewichtsaufbau erreichen. Ist der Alkaligehalt zu hoch - wie in Vergleichsbeispiel 3 gezeigt - ergeben sich Viskositäten, die sich praktisch nicht mehr verarbeiten lassen. Wird nur ein Katalysator eingesetzt (Vergleichsbeispiel 4), wird wiederum eine zu niedrige Viskosität erhalten.

### Vakuumfahrweise - erfindungsgemäß;

### Beispiel 4

103,2 g (0,60 Mol) 1,4-Cyclohexandicarbonsäure und 176,35 g (1,206 Mol) Isosorbid sowie 385,8 g ( 1,80 Mol) Diphenylcarbonat, 0,0666 g DMAP (4-Dimethylaminopyridin; 100 ppm bezogen auf die Einsatzstoffe CHDA, DPC und ISB) sowie 30 ppm Natrium, in Form einer wässrigen Lösung von Natriumbenzoat (gleiche Konzentration wie in Beispiel 1), wurden in einem Kolben mit Kurzwegabscheider vorgelegt. Das Gemisch wurde durch 4-faches evakuieren und belüften mit Stickstoff von Sauerstoff befreit. Das Gemisch wurde aufgeschmolzen und bei Normaldruck auf 180 °C unter Rühren erwärmt. Nach vollständigem Aufschmelzen der Einsatzstoffe wird 20 Minuten gerührt. Danach wird der Druck innerhalb von 25 Minuten auf 240 mbar reduziert. Der Druck wird innerhalb von 40 Minuten auf 140 mbar reduziert. Dabei wird kontinuierlich Phenol abdestilliert. Dann wird das Reaktionsgemisch mit Stickstoff belüftet und kontrolliert, ob noch eine CO₂ Entwicklung stattfindet. Bei Versiegen der CO₂ Entwicklung wird die Kondensationsphase (Phase 2) eingeleitet (sollte zu diesem Zeitpunkt noch eine CO2 Entwicklung zu beobachten sein, wird abgewartet, bis diese versiegt; zu diesem Zeitpunkt kann noch einmal 100 ppm DMAP zugegeben werden - dies ist erforderlich, sollte dieser Katalysator in der ersten Stufe komplett entfernt worden sein - dies kann durch eine schleppende Polykondensationsphase bemerkt werden). Der Druck wird auf 140 mbar und die Badtemperatur auf 105 °C eingestellt. Innerhalb von 15 Minuten wird der Druck auf 70 mbar gesenkt. Im weiteren Ablauf wird der Druck innerhalb von 50 Minuten auf 1mbar reduziert und die Badtemperatur auf 240 °C angehoben. Bei 1 mbar und 240 °C wird noch ca. 20 Minuten gerührt. Sollte sich die Schmelze am Rührer hochziehen wird diese vom Rührer entfernt und in die Schmelze zurückgeführt. Dazu muss der Ansatz kurzfristig belüftet werden. Es wird ein hellbraunes Polykondensat mit einem eta rel von 1,32 erhalten.

Beispiel 4 zeigt, dass sich durch das erfindungsgemäße Verfahren mittels Vakuum, die Reaktionszeit in der Phase 1 deutlich herabsetzen lässt. Trotz höherer Einsatzmengen konnte somit die Phase 1 deutlich verkürzt werden.

### Beispiel 5: 3,3-Dimethylglutarsäure

24,63 g (0,1685 mol) Isosorbid, 8,01 g (0,05 mol) 3,3-Dimethylglutarsäure und 46,36 g (0,2165 mol) Diphenylcarbonat sowie 100ppm (0,079 g) DMAP und 30ppm Li (als wässrige Lösung von LiOH mittels einer Stammlösung (100,00g/L) ->0,078mL ) wurden in einem Dreihalskolben mit Kurzwegabscheider vorgelegt. Der Kolbeninhalt wurde durch 4-faches Evakuieren und Belüften mit Stickstoff von Sauerstoff befreit. Das Gemisch wurde auf 160°C erwärmt und aufgeschmolzen. Nach dem Aufschmelzen wurde für 45 Minuten bei 160 °C gerührt. Die Temperatur wurde dann stufenweise innerhalb 1,5 Stunden auf 225 °C. erhöht. Innerhalb von 30 Minuten wurde der Druck auf 500 mbar gesenkt. Dabei wurde kontinuierlich Phenol entfernt. Die Temperatur wurde auf 235 °C erhöht und der Druck innerhalb von 2 Stunden langsam auf 0,1 mbar gesenkt. Nach 10-minütigen Rühren bei 235 °C und 0,1 mbar wurde die Reaktion abgebrochen und die Schmelze entnommen.

Man erhielt eine farbhelle Polymerschmelze mit einer Lösungsviskosität von 1,256 und einer Glastemperatur von 121 °C.

### Beispiel 6: Mischung 3,3-Dimethylglutarsäure und Cyclohexandicarbonsäure

29,83 g (0,2040 mol) Isosorbid, 8,01 g (0,05 mol) 3,3-Dimethylglutarsäure, 8,60 g (0,050 mol) Cyclohexandicarbonsäure und 64,30 g (0,30 mol) Diphenycarbonat sowie 100 ppm (0,0111 g) DMAP und 10 ppm Na als Natriumbenzoat (0,0069 g) wurden in einem Dreihalskolben mit Kurzwegabscheider vorgelegt. Der Kolbeninhalt wurde durch 4-faches Evakuieren und Belüften mit Stickstoff von Sauerstoff befreit. Das Gemisch wurde auf 160°C erwärmt und aufgeschmolzen. Nach dem Aufschmelzen wurde für 15 Minuten bei 160 °C gerührt. Die Temperatur wurde auf 175 °C erhöht und es wurde für 75 Minuten bei dieser Temperatur gerührt. Danach wurden nochmals 100 ppm (0,0111 g) DMAP hinzugegeben und für weitere 30 Minuten bei 175 °C gerührt. Nach Ende der Gasentwicklung wurde innerhalb von 1,5 Stunden die Temperatur schrittweise auf 220 °C erhöht. Dabei wurde kontinuierlich Phenol entfernt. Die Temperatur wurde dann auf 230 °C erhöht und der Druck stufenweise innerhalb von 1 Stunde auf 1 mbar reduziert. Bei 1 mbar wurde noch 10 Minuten gerührt und die Schmelze danach entnommen.

Man erhielt eine farbhelle Polymerschmelze mit einer Lösungsviskosität von eta rel 1,24.

Die Beispiele 5 und 6 zeigen, dass auch lineare aliphatische Dicarbonsäuren und auch Mischungen von linearen aliphatischen Dicarbonsäuren mit cycloaliphatischen Dicarbonsäuren ein Polyestercarbonat mit den gewünschten und verarbeitbaren Viskositäten liefern.

## Patentansprüche

1. Verfahren zur Herstellung eines Polyestercarbonats mittels Schmelzeumesterung, umfassend die Schritte
(i) Reaktion zumindest mindestens einer linearen aliphatischen Dicarbonsäure und/oder mindestens einer cycloaliphatischen Dicarbonsäure mit mindestens einem Diarylcarbonat in Anwesenheit mindestens einer aliphatischen Dihydroxy-Verbindung und in Anwesenheit eines ersten Katalysators und / oder eines zweiten Katalysators,
(ii) weitere Aufkondensation des aus Verfahrensschritt (i) erhaltenen Gemisches in Anwesenheit des ersten Katalysators und des zweiten Katalysators zumindest unter Entfernung der bei der Kondensation abgespaltenen chemischen Verbindung,
wobei der erste Katalysator mindestens eine tertiäre Stickstoffbase ist,
wobei der zweite Katalysator mindestens ein basisch wirkendes Alkalimetallsalz ist
und wobei der Anteil der Alkalimetallkationen in Verfahrensschritt (ii) 0,0008 bis 0,0030 Gew.-%, bezogen auf alle im Verfahrensschritt (i) eingesetzten Komponenten, beträgt.

2. Verfahren nach Anspruch 1, **dadurch gekennzeichnet, dass** die mindestens eine aliphatische Dihydroxy-Verbindung ausgewählt ist aus der Gruppe, bestehend aus 1,2-Cyclohexandiol, 1,3-Cyclohexandiol, 1,4-Cyclohexandiol, 1,2-Cyclohexandimethanol, 1,3-Cyclohexandimethanol, 1,4-Cyclohexandimethanol, Tricyclodecandimethanol, 3,9-bis(1,1-Dimethyl-2-hydroxyethyl)-2,4,8,10-tetraoxaspiro[5.5]undecane, 2,2-bis(4-Hydroxycyclohexyl)propan, Tetrahydro-2,5-furandimethanol und 1,4:3,6-Dianhydrohexitolen wie Isomannid, Isoidid und Isosorbid.

3. Verfahren nach Anspruch 2, **dadurch gekennzeichnet, dass** die mindestens eine aliphatische Dihydroxy-Verbindung Isosorbid ist.

4. Verfahren nach einem der Ansprüche 1 bis 3, **dadurch gekennzeichnet, dass** die mindestens eine lineare aliphatische Dicarbonsäure und/oder die mindestens eine cycloaliphatische Dicarbonsäure dargestellt wird durch die allgemeine Formel (1): 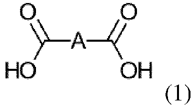 in der A für R₃ steht oder für eine der Formeln (Ia) oder (Ib),
wobei R₃ für eine lineare Alkylen-Gruppe mit 3 bis 16 Kohlenstoffatomen, bevorzugt 3 bis 8 Kohlenstoffatomen, besonders bevorzugt 3 bis 6 Kohlenstoffatomen, des Weiteren bevorzugt 3 oder 4 Kohlenstoffatomen steht und diese Alkylen-Gruppe gegebenenfalls einfach oder mehrfach substituiert sein kann oder 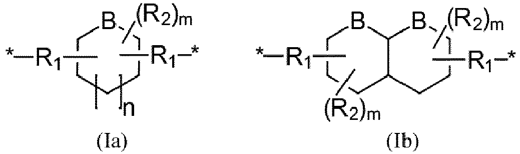 worin
B jeweils unabhängig voneinander für eine CH₂-Gruppe, für O oder für S steht,
R₁ jeweils unabhängig voneinander für eine Einfachbindung oder eine Alkylen-Gruppe mit 1 bis 10 Kohlenstoffatomen, bevorzugt eine Einfachbindung oder eine Alkylen-Gruppe mit 1 bis 9 Kohlenstoffatomen, besonders bevorzugt eine Einfachbindung oder eine Alkylen-Gruppe mit 1 bis 8 Kohlenstoffatomen steht, ebenso bevorzugt eine Einfachbindung oder eine Alkylen-Gruppe mit 1 bis 5 Kohlenstoffatomen, insbesondere bevorzugt eine Einfachbindung, steht und
R₂ jeweils unabhängig voneinander für eine Alkylen-Gruppe mit 1 bis 10 Kohlenstoffatomen, bevorzugt 1 bis 9 Kohlenstoffatomen, besonders bevorzugt 1 bis 8 Kohlenstoffatomen steht,
n eine Zahl zwischen 0 und 3, bevorzugt zwischen 0 und 2, besonders bevorzugt zwischen 0 und 1, ganz besonders bevorzugt 1 ist,
m eine Zahl zwischen 0 und 6, bevorzugt zwischen 0 und 3, besonders bevorzugt zwischen 0 und 2, ganz besonders bevorzugt 0 ist und die "^{∗}" die Positionen angeben, an denen die Carbonsäuregruppen der Formel (1) vorhanden sind.

5. Verfahren nach Anspruch 4, **dadurch gekennzeichnet, dass** R₃ ausgewählt aus -CH₂-CH₂-CH₂-, -CH₂-CH₂-CH₂-CH₂-, -CH₂-CH₂-CH₂-CH₂-CH₂-, -CH₂-CH₂-CH₂-CH₂-CH₂-CH₂-, -CH₂-CH₂-CH₂-CH₂-CH₂-CH₂-CH₂-, -CH₂-CH₂-CH₂-CH₂-CH₂-CH₂-CH₂-CH₂-, -CH₂-C(CH₃)₂-CH₂-, -CH₂-CH(CH₃)-CH₂-C(CH₃)₂-, -CH₂-C(CH₃)₂-CH₂-CH(CH₃)- und -CH(CH₃)-CH₂-CH₂-C(CH₃)₂- und die cycloaliphatische Dicarbonsäure hydrierte Dimerfettsäure ist oder eine Verbindung der Formel (IIa), (IIb) oder Mischungen davon 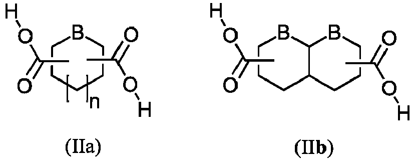 worin
B jeweils unabhängig voneinander für eine CH₂-Gruppe oder ein Heteroatom, welches ausgewählt ist aus der Gruppe, bestehend aus O und S, steht und n eine Zahl zwischen 0 und 3 ist.

6. Verfahren nach Anspruch 5, **dadurch gekennzeichnet, dass** die mindestens eine cycloaliphatische Dicarbonsäure 1,4-Cyclohexandicarbonsäure ist.

7. Verfahren nach einem der Ansprüche 1 bis 6, **dadurch gekennzeichnet, dass** das mindestens eine Diarylcarbonat ausgewählt wird aus der Gruppe, bestehend aus einer Verbindung der Formel (2) 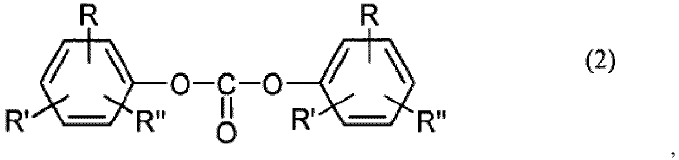 worin
R, R' und R" jeweils unabhängig voneinander gleich oder verschieden sein können und für Wasserstoff, gegebenenfalls verzweigtes C1-C34Alkyl, C7-C34-Alkylaryl, C6-C34-Aryl, eine Nitrogruppe, eine Carbonyl-enthaltende Gruppe, eine Carboxyl-enthaltende Gruppe oder eine Halogengruppe stehen.

8. Verfahren nach Anspruch 7, **dadurch gekennzeichnet, dass** das mindestens eine Diarylcarbonat Diphenylcarbonat ist.

9. Verfahren nach Anspruch einem der vorhergehenden Ansprüche, **dadurch gekennzeichnet, dass** der erste Katalysator ausgewählt ist aus der Gruppe bestehend aus von Guanidin abgeleiteten Basen, 4-Dimethylaminopyridin, 1,8-Diazabicyclo[5.4.0]undec-7-en (DBU), 1,5-Diazabicyclo[4.3.0]non-5-en (DBN), 1,5,7-Triazabicyclo[4.4.0]dec-5-en sowie Mischungen dieser Substanzen.

10. Verfahren nach einem der vorhergehenden Ansprüche, **dadurch gekennzeichnet, dass** der erste Katalysator in einer Menge von 0,002 bis 0,1 Gew.-% eingesetzt wird, bezogen auf alle im Verfahrensschritt (i) eingesetzten Komponenten.

11. Verfahren nach einem der vorhergehenden Ansprüche, **dadurch gekennzeichnet, dass** der zweite Katalysator ausgewählt ist aus der Gruppe bestehend aus Natriumphenolat, Lithiumphenolat, Natriumhydroxyd, Lithiumhyroxid, Natriumbenzoat, Lithiumbenzoat und Mischungen daraus.

12. Verfahren nach einem der vorhergehenden Ansprüche, **dadurch gekennzeichnet, dass** die bei der Kondensation abgespaltenen chemischen Verbindung in Verfahrensschritt (ii) mittels Vakuum entfernt wird.

13. Polyestercarbonat, erhältlich nach dem Verfahren gemäß einem der Ansprüche 1 bis 12.

14. Formmasse enthaltend ein Polyestercarbonat gemäß Anspruch 13.

15. Formkörper enthaltend ein Polyestercarbonat gemäß Anspruch 13.

## Claims

1. Process for producing a polyester carbonate by melt transesterification, comprising the steps of:
(i) reacting at least one linear aliphatic dicarboxylic acid and/or at least one cycloaliphatic dicarboxylic acid with at least one diaryl carbonate in the presence of at least one aliphatic dihydroxy compound and in the presence of a first catalyst and/or a second catalyst,
(ii) subjecting the mixture obtained from process step (i) to a further condensation in the presence of the first catalyst and the second catalyst, at least with removal of the chemical compound eliminated in the condensation,
wherein the first catalyst is at least one tertiary nitrogen base,
wherein the second catalyst is at least one basic alkali metal salt,
and wherein the proportion of alkali metal cations in process step (ii) is 0.0008% to 0.0030% by weight based on all components used in process step (i).

2. Process according to Claim 1, **characterized in that** the at least one aliphatic dihydroxy compound is selected from the group consisting of cyclohexane-1,2-diol, cyclohexane-1,3-diol, cyclohexane-1,4-diol, cyclohexane-1,2-dimethanol, cyclohexane-1,3-dimethanol, cyclohexane-1,4-dimethanol, tricyclodecanedimethanol, 3,9-bis(1,1-dimethyl-2-hydroxyethyl)-2,4,8,10-tetraoxaspiro[5.5]undecane, 2,2-bis(4-hydroxycyclohexyl)propane, tetrahydrofuran-2,5-dimethanol, and 1,4:3,6-dianhydrohexitols such as isomannide, isoidide and isosorbide.

3. Process according to Claim 2, **characterized in that** the at least one aliphatic dihydroxy compound is isosorbide.

4. Process according to any of Claims 1 to 3, **characterized in that** the at least one linear aliphatic dicarboxylic acid and/or the at least one cycloaliphatic dicarboxylic acid is represented by the general formula (1) : 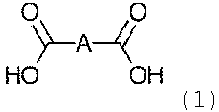 in which A represents R₃ or one of formulas (Ia) or (Ib), where R₃ represents a linear alkylene group having 3 to 16 carbon atoms, preferably 3 to 8 carbon atoms, more preferably 3 to 6 carbon atoms, further preferably 3 or 4 carbon atoms, and this alkylene group may optionally be mono- or polysubstituted or 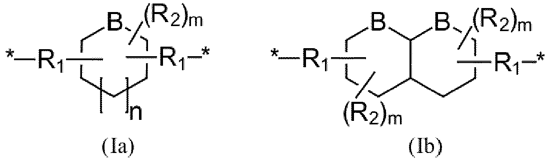 in which
B in each case independently represents a CH₂ group, O or S,
R₁ in each case independently represents a single bond or an alkylene group having 1 to 10 carbon atoms, preferably a single bond or an alkylene group having 1 to 9 carbon atoms, more preferably a single bond or an alkylene group having 1 to 8 carbon atoms, likewise preferably a single bond or an alkylene group having 1 to 5 carbon atoms, particularly preferably a single bond, and
R₂ in each case independently represents an alkylene group having 1 to 10 carbon atoms, preferably 1 to 9 carbon atoms, more preferably 1 to 8 carbon atoms,
n is a number between 0 and 3, preferably between 0 and 2, particularly preferably between 0 and 1, very particularly preferably 1,
m is a number between 0 and 6, preferably between 0 and 3, particularly preferably between 0 and 2, very particularly preferably 0, and "*" indicate the positions at which the carboxylic acid groups in formula (1) are present.

5. Process according to Claim 4, **characterized in that** R₃ is selected from -CH₂-CH₂-CH₂-, -CH₂-CH₂-CH₂-CH₂-, -CH₂-CH₂-CH₂-CH₂-CH₂-, -CH₂-CH₂-CH₂-CH₂-CH₂-CH₂-, -CH₂-CH₂-CH₂-CH₂-CH₂-CH₂-CH₂-, -CH₂-CH₂-CH₂-CH₂-CH₂-CH₂-CH₂-CH₂-, -CH₂-C(CH₃)₂-CH₂-, -CH₂-CH(CH₃)-CH₂-C(CH₃)₂-, -CH₂-C(CH₃)₂-CH₂-CH(CH₃)-, and -CH(CH₃)-CH₂-CH₂-C(CH₃)₂- and the cycloaliphatic dicarboxylic acid is hydrogenated dimer fatty acid or a compound of formula (IIa), (IIb) or mixtures thereof 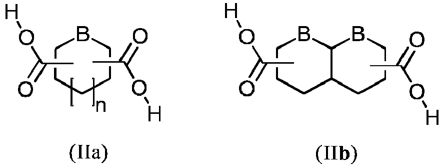 in which
B in each case independently represents a CH₂ group or a heteroatom selected from the group consisting of O and S, and n is a number between 0 and 3.

6. Process according to Claim 5, **characterized in that** the at least one cycloaliphatic dicarboxylic acid is cyclohexane-1,4-dicarboxylic acid.

7. Process according to any of Claims 1 to 6, **characterized in that** the at least one diaryl carbonate is selected from the group consisting of a compound of formula (2) 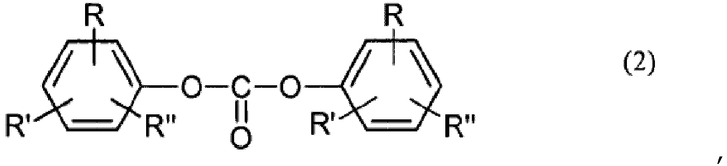 in which
R, R', and R" may each independently be identical or different and represent hydrogen, optionally branched C1-C34 alkyl, C7-C34 alkylaryl, C6-C34 aryl, a nitro group, a carbonyl-containing group, a carboxyl-containing group or a halogen group.

8. Process according to Claim 7, **characterized in that** the at least one diaryl carbonate is diphenyl carbonate.

9. Process according to any of the preceding claims, **characterized in that** the first catalyst is selected from the group consisting of bases derived from guanidine, 4-dimethylaminopyridine, 1,8-diazabicyclo[5.4.0]undec-7-ene (DBU), 1,5-diazabicyclo[4.3.0]non-5-ene (DBN), 1,5,7-triazabicyclo[4.4.0]dec-5-ene and mixtures of these substances.

10. Process according to any of the preceding claims, **characterized in that** the first catalyst is used in an amount of from 0.002% to 0.1% by weight based on all components used in process step (i).

11. Process according to any of the preceding claims, **characterized in that** the second catalyst is selected from the group consisting of sodium phenoxide, lithium phenoxide, sodium hydroxide, lithium hydroxide, sodium benzoate, lithium benzoate, and mixtures thereof.

12. Process according to any of the preceding claims, **characterized in that** the chemical compound eliminated in the condensation is removed in process step (ii) by means of reduced pressure.

13. Polyester carbonate obtainable by the process according to any of Claims 1 to 12.

14. Moulding compound comprising a polyester carbonate according to Claim 13.

15. Moulding comprising a polyester carbonate according to Claim 13.

## Revendications

1. Procédé de préparation d'un polyester carbonate par transestérification à l'état fondu, comprenant les étapes suivantes :
(i) réaction d'au moins un acide dicarboxylique aliphatique linéaire et/ou d'au moins un acide dicarboxylique cycloaliphatique avec au moins un carbonate de diaryle en présence d'au moins un composé dihydroxylé aliphatique et en présence d'un premier catalyseur et/ou d'un deuxième catalyseur,
(ii) puis condensation du mélange obtenu dans l'étape (i) en présence du premier catalyseur et du deuxième catalyseur, au moins avec élimination du composé chimique dissocié lors de la condensation,
dans lequel le premier catalyseur est au moins une base azotée tertiaire,
dans lequel le deuxième catalyseur est au moins un sel d'un métal alcalin à action basique,
et dans lequel la proportion des ions de métaux alcalins dans l'étape (ii) est de 0,0008 à 0,0030 % en poids par rapport à tous les composants utilisés dans l'étape (i).

2. Procédé selon la revendication 1,**caractérisé en ce que** l'au moins un composé dihydroxylé aliphatique est choisi dans le groupe consistant en les composés suivants : 1,2-cyclohexanediol, 1,3-cyclohexanediol, 1,4-cyclohexanediol, 1,2-cyclohexanediméthanol, 1,3-cyclohexanediméthanol, 1,4-cyclohexanediméthanol, tricyclodécanediméthanol, 3,9-bis(1,1-diméthyl-2-hydroxyéthyl)-2,4,8,10-tétraoxaspiro[5.5]undécane, 2,2-bis(4-hydroxycyclohexyl)propane, tétrahydro-2,5-furanediméthanol et les 1,4:3,6-dianhydrohexitols tels que l'isomannide, l'isoidide et l'isosorbide.

3. Procédé selon la revendication 2, **caractérisé en ce que** l'au moins un composé dihydroxylé aliphatique est l'isosorbide.

4. Procédé selon l'une des revendications 1 à 3, **caractérisé en ce que** l'au moins un acide dicarboxylique aliphatique linéaire et/ou l'au moins un acide dicarboxylique cycloaliphatique sont représentés par la formule générale (1) : 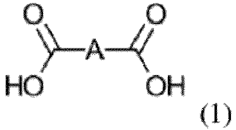 dans laquelle A représente R₃ ou l'une des formules (Ia) ou (Ib),
dans laquelle R₃ représente un groupe alkylène linéaire ayant 3 à 16 atomes de carbone, de préférence 3 à 8 atomes de carbone, d'une manière particulièrement préférée 3 à 6 atomes de carbone, plus spécialement 3 ou 4 atomes de carbone, et ce groupe alkylène peut éventuellement être une ou plusieurs fois substitué, ou 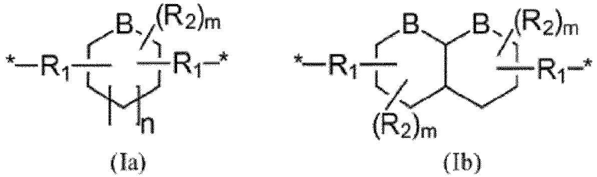 dans laquelle
chaque B représente indépendamment des autres un groupe CH₂, O ou S,
chaque R₁ représente indépendamment les uns des autres une liaison simple ou un groupe alkylène ayant 1 à 10 atomes de carbone, de préférence une liaison simple ou un groupe alkylène ayant 1 à 9 atomes de carbone, d'une manière particulièrement préférée une liaison simple ou un groupe alkylène ayant 1 à 8 atomes de carbone, plus préférentiellement une liaison simple ou un groupe alkylène ayant 1 à 5 atomes de carbone, d'une manière tout particulièrement préférée une liaison simple, et
chaque R₂ représente indépendamment des autres un groupe alkylène ayant 1 à 10 atomes de carbone, de préférence 1 à 9 atomes de carbone, d'une manière particulièrement préférée 1 à 8 atomes de carbone, n représente un nombre entre 0 et 3, de préférence entre 0 et 2, d'une manière particulièrement préférée entre 0 et 1, d'une manière tout particulièrement préférée 1,
m représente un nombre entre 0 et 6, de préférence entre 0 et 3, d'une manière particulièrement préférée entre 0 et 2, d'une manière tout particulièrement préférée 0, et les « * » indiquent les positions sur lesquelles sont présents les groupes acide carboxylique de Formule (1).

5. Procédé selon la revendication 4, **caractérisé en ce que** R₃ est choisi parmi -CH₂-CH₂-CH₂-, -CH₂-CH₂-CH₂-CH₂-, - CH₂-CH₂-CH₂-CH₂-CH₂-, -CH₂-CH₂-CH₂-CH₂-CH₂-CH₂-, -CH₂-CH₂-CH₂-CH₂-CH₂-CH₂-CH₂-, -CH₂-CH₂-CH₂-CH₂-CH₂-CH₂-CH₂-CH₂-, - CH₂-C(CH₃)₂-CH₂-, -CH₂-CH(CH₃)-CH₂-C(CH₃)₂-, -CH₂-C(CH₃)₂-CH₂-CH(CH₃)- et -CH(CH₃)-CH₂-CH₂-C(CH₃)₂-, et l'acide dicarboxylique cycloaliphatique est un acide gras dimère hydrogéné ou un composé de Formule (IIa) ou (IIb), ou des mélanges de ceux-ci 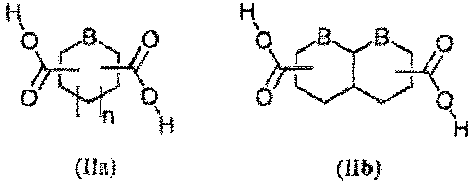 dans lesquelles
chaque B représente indépendamment des autres un groupe CH₂ ou un hétéroatome, qui est choisi dans le groupe consistant en O et S, et n représente un nombre entre 0 et 3.

6. Procédé selon la revendication 5, **caractérisé en ce que** l'au moins un acide dicarboxylique cycloaliphatique est l'acide 1,4-cyclohexanedicarboxylique.

7. Procédé selon l'une des revendications 1 à 6, **caractérisé en ce que** l'au moins un carbonate de diaryle est choisi dans le groupe consistant en un composé de Formule (2) 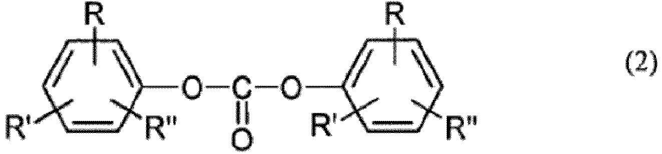 dans laquelle R, R' et R" peuvent chacun indépendamment des autres être identiques ou différents et représentent un hydrogène, éventuellement un alkyle en C1-C34, un alkylaryle en C7-C34 ou un aryle en C6-C34 ramifié, un groupe nitro, un groupe carbonylé, un groupe carboxylé ou un groupe halogéno.

8. Procédé selon la revendication 7, **caractérisé en ce que** l'au moins un carbonate de diaryle est le carbonate de diphényle.

9. Procédé selon l'une des revendications précédentes, **caractérisé en ce que** le premier catalyseur est choisi dans le groupe consistant en les bases dérivées de la guanidine, la 4-diméthylaminopyridine, le 1,8-diazabicyclo[5.4.0]undéc-7-ène (DBU), le 1,5-diazabicyclo[4.3.0]non-5-ène (DBN), le 1,5,7-triazabicyclo[4.4.0]déc-5-ène, ainsi que les mélanges de ces substances.

10. Procédé selon l'une des revendications précédentes, **caractérisé en ce que** le premier catalyseur est utilisé en une quantité de 0,002 à 0,1 % en poids par rapport à la totalité des composants utilisés dans l'étape (i).

11. Procédé selon l'une des revendications précédentes, **caractérisé en ce que** le deuxième catalyseur est choisi dans le groupe consistant en le phénolate de sodium, le phénolate de lithium, l'hydroxyde de sodium, l'hydroxyde de lithium, le benzoate de sodium, le benzoate de lithium ou les mélanges de ceux-ci.

12. Procédé selon l'une des revendications précédentes, **caractérisé en ce que** le composé chimique dissocié lors de la condensation de l'étape (ii) est éliminé sous vide.

13. Polyester carbonate pouvant être obtenu par le procédé selon l'une des revendications 1 à 12.

14. Mélange à mouler contenant un polyester carbonate selon la revendication 13.

15. Objet moulé contenant un polyester carbonate selon la revendication 13.
